# EUROPEAN PATENT APPLICATION

(11) **EP 4 109 275 A1**
(43) Date of publication of application: **28.12.2022**
(21) Application number: 22180486.7
(22) Date of filing: 22.06.2022
(51) Int. Cl.: G06F 11/30, G06F 11/34

(54) **METHODS AND APPARATUS TO TRANSMIT CENTRAL PROCESSING UNIT PERFORMANCE INFORMATION TO AN OPERATING SYSTEM**

(30) Priority: 25.06.2021 US 202117359404
(71) Applicant: INTEL Corporation, Santa Clara, CA 95054 (US)
(72) Inventor: ZHU, Lei, Shanghai, 200240 (CN); LI, Kevin Yufu, Shanghai, 200124 (CN); LIU, Shijie, Shanghai 31, 200241 (CN); XU, Tao, Shanghai, 200241 (CN)
(74) Representative: 2SPL Patentanwälte PartG mbB

(57) **Abstract**

Methods, apparatus, systems, and articles of manufacture are disclosed to transmit central processing unit (CPU) performance information to an operating system (OS). An apparatus comprising interface circuitry, and processor circuitry to perform at least one of the first operations, the second operations or the third operations to: a CPU detector circuitry to determine a connection status between a first CPU and a second CPU, an encoder circuitry to generate a first CPU identifier for the first CPU port and a second CPU identifier for the second CPU port, a topology identifier circuitry to identify a topology based on the connection status and the CPU identifiers, a transaction performance level (TPL) calculator circuitry to calculate a TPL based on at least one of the connection status, the CPU identifiers, and a topology identifier circuitry, and a TPL transmitter circuitry to transmit the TPL to an OS.

## Description

### FIELD OF THE DISCLOSURE

This disclosure relates generally to central processing units (CPUs) and, more particularly, to methods and apparatus to transmit CPU performance information to an operating system (OS).

### BACKGROUND

In recent years, CPU communication in a server/cloud system affects system performance. CPUs in a network are connected to each other and exchange data transaction messages via CPU ports. The data transaction messages between CPU ports allow one CPU to access computing devices owned by or associated with another CPU. More CPU ports create more complex server/cloud systems.

### BRIEF DESCRIPTION OF THE DRAWINGS

FIG. 1 is a block diagram of an example CPU network environment to facilitate data transmission to an OS.
FIG. 2 is an example processor system with a symmetrical multi-socket topology.
FIG. 3 an example processor system with a heterogenous multi-socket topology.
FIG. 4 is an example cloud server system of the example processor system of FIG. 3.
FIG. 5 is an example processor system with a symmetrical multi-socket topology with an error in an example CPU link.
FIG. 6 is the example processor system of FIG. 3 with an incorrect CPU port assignment.
FIG. 7 is the example processor system of FIG. 3 with an incorrect CPU pair assignment.
FIG. 8 is the example processor system of FIG. 3 with the transaction performance level (TPL) transmitted to the OS.
FIG. 9 is an example timing diagram that illustrates an example TPL data collection flow.
FIG. 10 is an example diagram for data structure entry for CPU port character and multi-socket topology.
FIG. 11 is an example TPL calculation between two example CPUs.
FIGS. 12 and 13 are an example TPL calculation between four example CPUs.
FIG. 14 is a flowchart representative of example machine readable instructions that may be executed by example processor circuitry to implement the example TPL calculation of FIGS. 11-13.
FIG. 15 is a flowchart representative of example machine readable instructions that may be executed by example processor circuitry to implement the example process system of FIG. 8.
FIG. 16 is a block diagram of an example processing platform including processor circuitry structured to execute the example machine readable instructions of FIG. 14-15 to implement FIGS. 8 and 11.
FIG. 17 is a block diagram of an example implementation of the processor circuitry of FIG. 16.
FIG. 18 is a block diagram of another example implementation of the processor circuitry of FIG. 16.

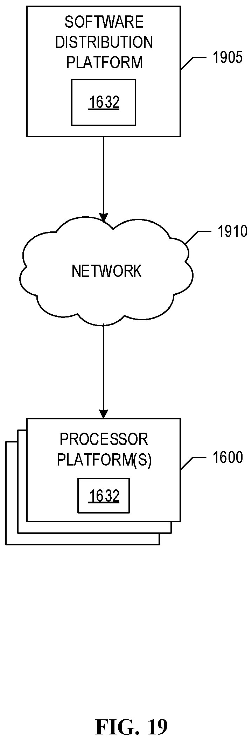

FIG. 19 is a block diagram of an example software distribution platform (e.g., one or more servers) to distribute software (e.g., software corresponding to the example machine readable instructions of FIGS. 14-15 to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

The figures are not to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular. In general, the same reference numbers will be used throughout the drawing(s) and accompanying written description to refer to the same or like parts. As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween. As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events. As used herein, "processor circuitry" is defined to include (i) one or more special purpose electrical circuits structured to perform specific operation(s) and including one or more semiconductor-based logic devices (e.g., electrical hardware implemented by one or more transistors), and/or (ii) one or more general purpose semiconductor-based electrical circuits programmed with instructions to perform specific operations and including one or more semiconductor-based logic devices (e.g., electrical hardware implemented by one or more transistors). Examples of processor circuitry include programmed microprocessors, Field Programmable Gate Arrays (FPGAs) that may instantiate instructions, Central Processor Units (CPUs), Graphics Processor Units (GPUs), Digital Signal Processors (DSPs), XPUs, or microcontrollers and integrated circuits such as Application Specific Integrated Circuits (ASICs). For example, an XPU may be implemented by a heterogeneous computing system including multiple types of processor circuitry (e.g., one or more FPGAs, one or more CPUs, one or more GPUs, one or more DSPs, etc., and/or a combination thereof) and application programming interface(s) (API(s)) that may assign computing task(s) to whichever one(s) of the multiple types of the processing circuitry is/are best suited to execute the computing task(s).

### DETAILED DESCRIPTION

Methods and apparatus to transmit CPU performance to an OS are disclosed. CPU port performance can affect server and/or cloud performance in a CPU network environment. Multiple high-performance CPUs can be built into one interconnect server/cloud system to achieve high system performance. For example, for one CPU to access the computing devices, such as PCIE (Peripheral Component Interconnect Express) devices, owned by, or associated with, another CPU, the data transaction occurs through a bridge that connect the CPU ports. The data transactions can include cache coherency management messages, interrupts, and other kinds of system messages. An interconnect server/cloud system with multiple CPUs can be referred to as a multi-socket topology.

For expanding and improving data transaction bandwidth, the total number of CPU ports is increased to meet marketing demands. For an example server system, a CPU could support 2, 4, or 6 CPU ports to improve data transaction bandwidth. These multi-socket topologies improve server/cloud performance.

More CPU ports create more complicated topologies and can inhibit server/cloud system performance. Enhanced system performance via CPU ports is based on the characteristics/features of the CPU ports and the different multi-socket topologies, such as heterogeneous multi-socket topologies and symmetrical multi-socket topologies. Currently, an OS does not have the capability to recognize CPU ports characteristics/features and the actual topology of the CPU network. The OS incorrectly assumes a symmetrical topology and a consistent transaction performance between corresponding CPUs. This adversely affects system performance. As heterogeneous topologies become more utilized in designs, unexpected errors occur in CPU ports. These unexpected errors cause changes in a topology of a CPU network that go unrecognized by OS.

The examples disclosed herein include a transaction performance level that can notify an OS or any other system or service with information about a CPU network. Examples disclosed herein collect information about CPU port characteristics and the CPU network topology so the OS can improve transaction performance in the CPU network. Examples disclosed herein calculate a Transaction Performance Level (TPL) for an example CPU port network and/or pairing.

Examples disclosed herein achieve the above benefits by utilizing CPU port features and topology information of the CPU network. For example, a TPL is generated based on at least one of a connection status between CPU ports, CPU port features, and/or a network topology. In such examples, the TPL is transmitted to the OS.

Examples disclosed herein include the CPU network including multiple processors. Examples disclosed herein include a multi-socket topology, the multi-socket topology to include multiple CPU ports. Examples disclosed herein include a TPL calculator circuitry calculating TPL based on at least one of a number of CPU ports between a first processor and a second processor, a link speed of the number of CPU ports and a link width of the number of CPU ports. Examples disclosed herein include a TPL transmitter circuitry transmitting the TPL to an OS includes transmission via a Unified Extensible Firmware Interface (UEFI) runtime service solution, wherein the UEFI runtime service solution collects the TPL for the topology. Examples disclosed herein include the UEFI runtime service solution to receive a request for the TPL from the OS. Examples disclosed herein further include the multi-socket topology to be at least one of a heterogeneous multi-socket topology or a symmetrical multi-socket topology. Examples disclosed herein further include the OS to identify an error to change the topology from a symmetrical multi-socket topology to a heterogeneous multi-socket topology.

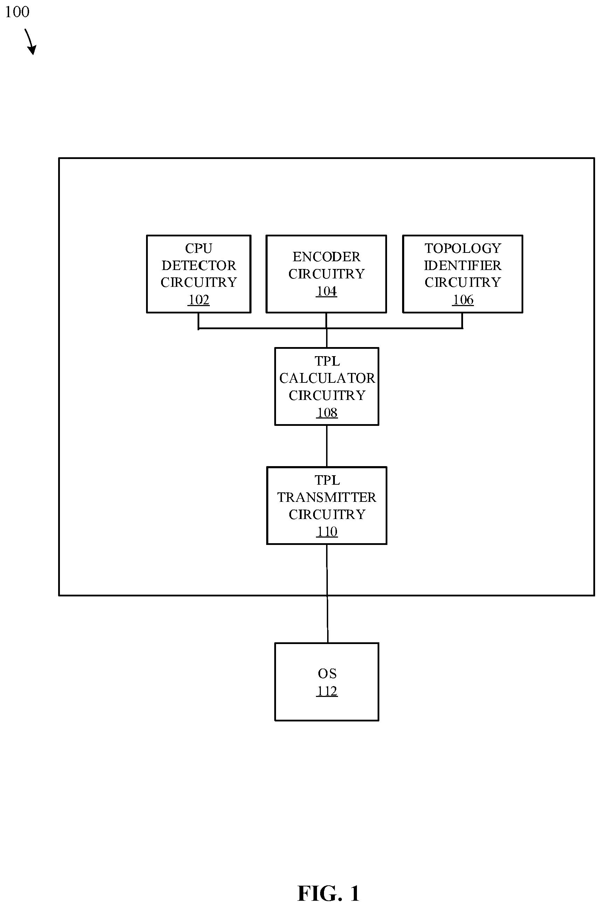

FIG. 1 is a block diagram of an example CPU network environment 100 to facilitate data transmission to an OS. The CPU network environment 100 includes an example CPU detector circuitry 102, an example encoder circuitry 104, an example topology identifier circuitry 106, an example TPL calculator circuitry 108, an example TPL transmitter circuitry 110, and an example OS 112.

The example CPU network environment 100 of FIG. 1 can include one or more CPUs in communication with one or more CPUs. In some examples, the example CPU network environment 100 is a server/cloud system.

The example CPU detector circuitry 102 determines a connection status between CPUs. For example, a connection status between CPUs can determine a number of CPUs involved in a data transaction. In some examples, the connection status is a valid bridge connection (e.g., link). In other examples, the connection status is an invalid bridge connection (e.g.) link.

The example encoder circuitry 104 generates CPU identifiers. In some examples, a CPU identifier is a characteristic and/or a feature of a CPU port. For example, a characteristic of a CPU port includes a link speed and/or a link width. In other examples, the CPU identifier includes a number of CPU ports on a given CPU.

The example topology identifier circuitry 106 identifies a topology of an example CPU network environment 100. For example, the topology is a multi-socket topology with multiple CPUs. In some examples, the topology identifier circuitry 106 identifies a symmetrical (e.g., balanced) multi-socket topology. In other examples, the topology identifier circuitry 106 identifies a heterogenous (e.g., unbalanced) multi-socket topology.

The example TPL calculator circuitry 108 calculates a TPL for a link in an example CPU network environment 100. For example, the TPL calculator circuitry 108 uses a formula to quantify a TPL. In some examples, the TPL calculator circuitry 108 calculates a TPL for a bridge connection between a first CPU and a second CPU. In other examples, the TPL calculator circuitry 108 calculates a TPL between a first CPU port on a first CPU and a second CPU port on a second CPU.

The example TPL transmitter circuitry 110 transmits the TPL. In some examples, the example TPL transmitter circuitry 110 is a Unified Extensible Firmware Interface (UEFI) to report TPL information. For example, the example TPL transmitter circuitry 110 can transmit information regarding TPL, CPU port assignments, CPU port features, a number of CPUs, CPU performance, and/or server/cloud system performance.

The example OS 112 is software that supports computing functions. In some examples, the example OS 112 is a Virtual Machine (VM). In other examples, the example OS 112 is software that communicates with hardware to provide basic computing functionality. For example, the example OS 112 provides computing functionality for a CPU network.

The example CPU detector circuitry 102 determines a connection status between CPU ports in the example CPU network environment 100. The example encoder circuitry 104 generates example CPU identifying features for CPU ports in the example CPU network environment 100. For example, the example CPU identifying features could be a link speed (e.g. 9.6 GT/s, 10.2 GT/s and 11.2 GT/s). In other examples, the example CPU identifying features could be a link width (e.g. 24 lanes, 16 lanes, 8 lanes, 4 lanes, 1 lane). In some examples, CPU ports have differing speeds and/or differing widths.

The example topology identifier circuitry 106 identifies a topology of the CPU network environment 100 based on information from at least one of the example detector circuitry 102 and the example encoder circuitry 104. In some examples, the topology is a multi-socket topology with multiple processors.

The example TPL calculator circuitry 108 calculates a TPL based on a connection status from the example detector circuitry 102, the example encoder circuitry 104, and the example topology identifier circuitry 106. In some examples, the TPL reflects a transaction performance between CPU ports in the example CPU network environment 100. The example TPL transmitter circuitry 110 transmits the TPL collected from the example TPL calculator circuitry 108 to the example OS 112. In some examples, the example IS 112 utilizes the TPL to optimize a task assignment within the example CPU network environment 100. For example, the example OS 112 allocates resources and coupled application to improve system performance within the example CPU network environment 100.

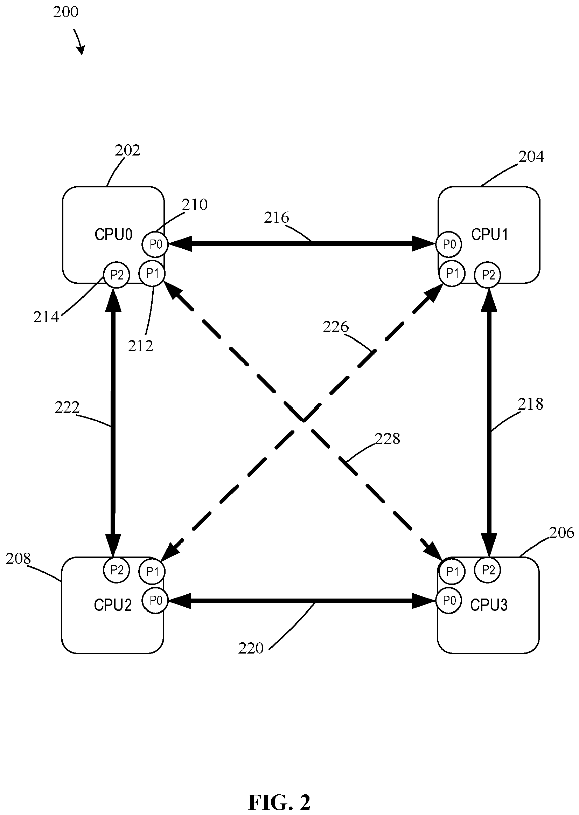

FIG. 2 is an example processor system 200 with a symmetrical multi-socket topology. The example processor system 200 includes four processors, CPU0 202, CPU1 204, CPU3 206, and CPU2 208.

In some examples, a CPU is a processor and or computer that retrieves and executes software instructions. For example, the CPUs 202, 204, 206, and 208 are hardware (e.g., hardware or logical processors).

In the illustrated example processor system 200, each of the four processors includes three CPU ports, P0 210, P1 212, and P2 214. In some examples, a CPU port is an interface between devices. For example, a CPU port is a part of a CPU available for connection with other CPUs and/or CPU ports.

In this example, the bridge connection 216 connects P0 210 on CPU0 202 with the corresponding port on CPU1 204. In some examples, the bridge connection 216 allows data transactions between CPU0 202 and CPU1 204. In some examples, the data transaction are cache coherency management messages and/or interrupts. In this example, the bridge connections 218, 220, 222, 226 and 228 connect corresponding ports between CPU0 202, CPU1 204, CPU2 208 and CPU3 206. Thus, the example processor system 200 is a fully connected and balanced topology, with an equal amount of bridge connections between the corresponding CPUs.

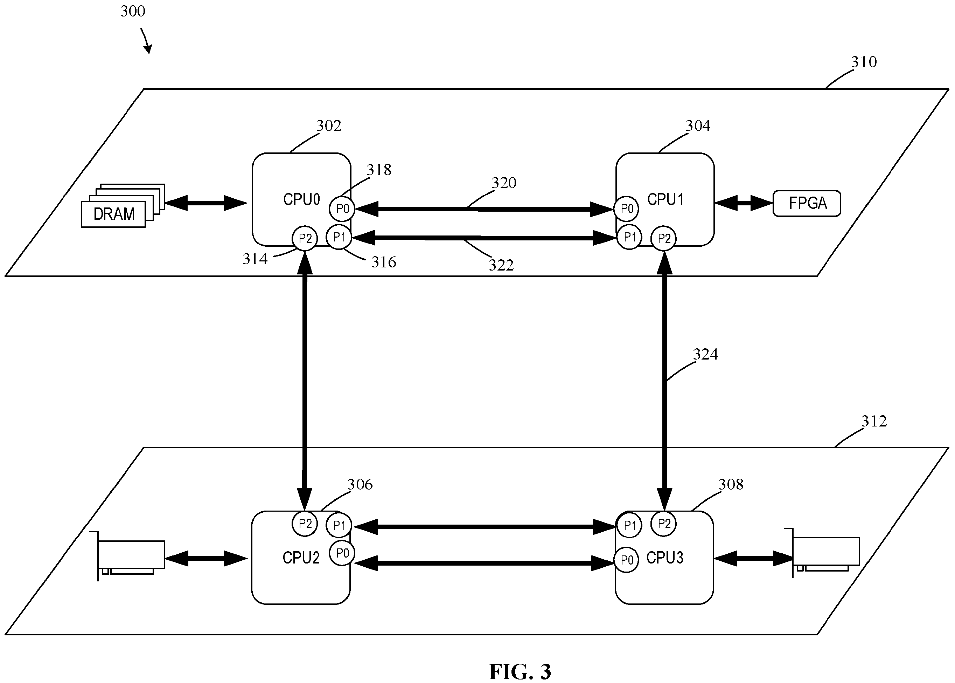

FIG. 3 an example processor system 300 with a heterogenous multi-socket topology. The example processor system 300 is similar to the example processor system 200 of FIG. 2, except for the number of bridge connections between the CPUs 302, 304, 306, and 308. In the example processor system 300, CPU0 302 and CPU1 304 are connected on a base board 310. Additionally or alternatively, CPU2 306 and CPU3 308 are connected on a based board 312. In this examples, CPU0 302 has ports P2 314, P1 316, and P0 318 available for connection with other computing devices and/or CPUs. In this example, the bridge connection 320 connects P0 318 on CPU0 302 with the corresponding port on CPU1 304. Additionally or alternatively, the bridge connection 322 connects P1 316 on CPU0 302 with the corresponding port on CPU1 304. In this example, the bridge connection 324 connects CPU1 304 with the corresponding port on CPU3 308. In the example processor system 300, the dual bridge connections (e.g., bridge and/or bridges) 320, 322 make this a heterogenous multi-socket topology because a number of bridge connections between CPU0 302 and CPU1 304 is unequal to a number of bridge connections between CPU1 304 and CPU3 308. In other examples, a heterogenous multi-socket topology is also referred to as an unbalanced topology.

In the example processor system 300, a transaction performance between CPU0 302 and CPU1 304 is two times higher than a transaction performance between CPU1 304 and CPU3 308, for example. In this example, the OS 112 incorrectly recognizes the example processor system 300 as a symmetrical multi-socket topology, such as FIG. 2.

In the example processor system 300, there are 4 connected processors. In other examples, there can be 6, 8 and/or any number of connected processors.

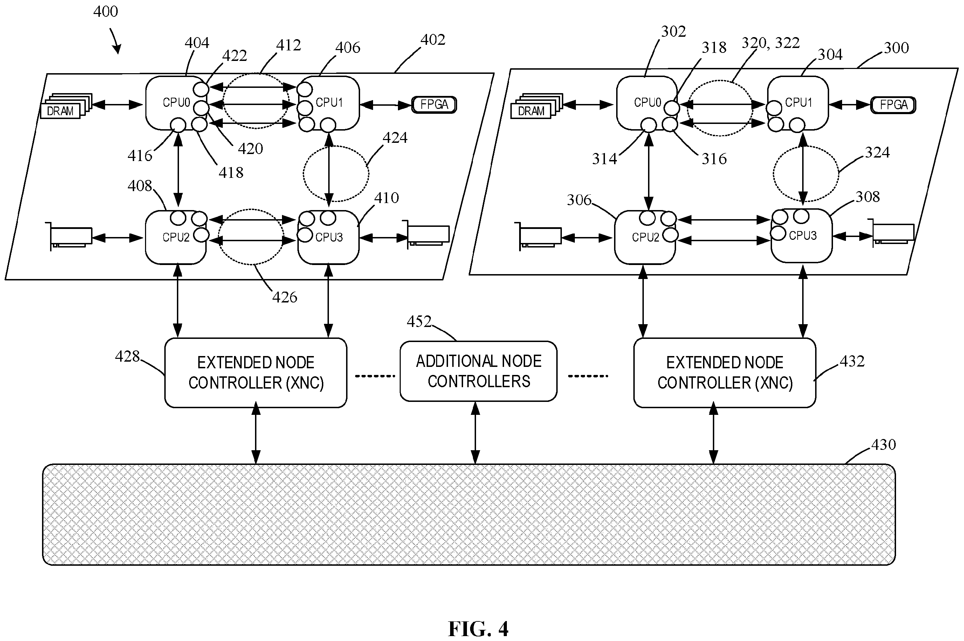

FIG. 4 is an example cloud server system of the example processor system of FIG. 3. In the example cloud server system 400 of FIG. 4, the example processor system 300 is connected to another example processor system 402. The example processor system 402 is similar to the example processor system 300 of FIG. 3, except for the number of bridge connections between the CPUs 404, 406, 408, and 410. In this example, the bridge connections 412 connect the corresponding ports of CPU0 404 (416, 418, 420, 422) with the corresponding ports on CPU1 406. In this example, the bridge connection 424 connects CPU1 406 with the corresponding port on CPU3 410. Additionally or alternatively, the bridge connections 426 connect the corresponding ports on CPU2 408 with the corresponding ports on CPU3 410. In the example processor system 402, the three bridge connections 412 and the two bridge connections 426 make this a heterogenous multi-socket topology because a number of bridge connections 412, 424, 426 are unequal.

In the example processor system 402, a transaction performance between CPU0 404 and CPU1 406 is higher than a transaction performance between CPU1 406 and CPU3 410, for example. Additionally or alternatively, a transaction performance between CPU2 408 and CPU3 410 is higher than a transaction performance between CPU1 406 and CPU3 410. In this example, the transaction performance between any two of the CPUs 404, 406, 408, 410 depends on a number of bridge connections between corresponding CPUs.

In the example cloud server system 400, an example Extended Node Controller (xNC) 428 connects the example processor system 402 to an example interconnect fabric 430. Additionally or alternatively, an xNC 432 connects the example processor system 300 to the example interconnect fabric 430. Additionally or alternatively, an example set of additional node controllers 452 connect the example xNC 428 to the example xNC 432. Thus, in this example, the example cloud server system 400 connects the example processor system 300 with the example processor system 402. In other examples, the example cloud server system 400 can connect any number of processor systems.

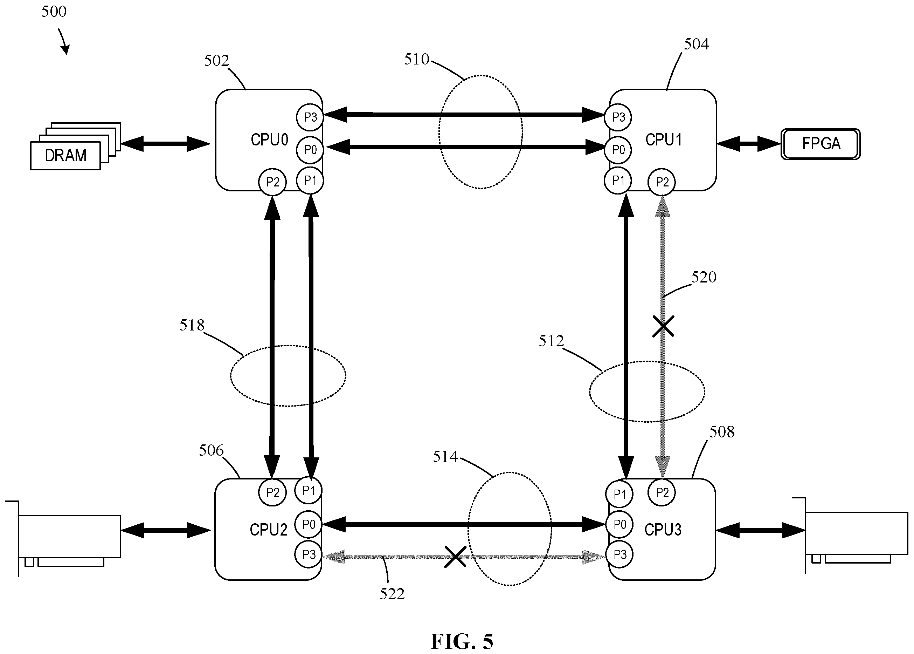

FIG. 5 is an example processor system 500 with a symmetrical multi-socket topology with an error in an example CPU link. The example processor system 500 is similar to the example processor system 300 except for the number of bridge connections between the CPUs 502, 504, 506, and 508. In the example processor system 500, the bridge connections 510, 512, 514, and 518 connect dual ports of corresponding CPUs. The example broken link 520 and the example broken link 522 illustrate an error in a boot process of the example processor system 500. In this example, the broken links 520 and 522 represent invalid port connections between CPU1 504, CPU3 508 and CPU3 508, CPU2 506, respectively. In this example, the broken links 520 and 522 change the initial symmetrical multi-socket topology of the example processor system 500 to a heterogeneous multi-socket topology. In some examples, the example OS 112 cannot identify this change in topology and assumes the example processor system 500 has retained the original topology and corresponding transaction performance between corresponding CPUs 504, 506, 508, 510. In such examples, the system performance of the example processor system 500 is adversely affected.

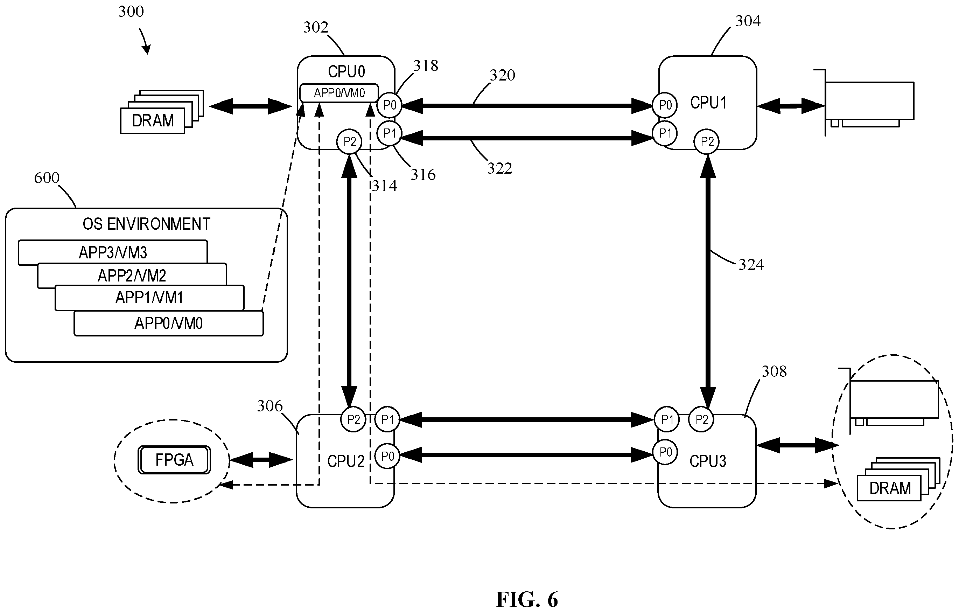

FIG. 6 is the example processor system 300 of FIG. 3 with an incorrect CPU port assignment. The example OS environment 600 contains example Application Programs (Apps) and example Virtual Machines (VMs) assigned to each of the CPUs 302, 304, 306, 308. In some examples, CPU0 302 is assigned App0/VM0, CPU1 304 is assigned App1/VM1, CPU2 306 is assigned App2/VM2, and CPU3 308 is assigned App3/VM3. In this example, the OS 600 does not accurately recognize the transaction characteristics among CPUs 302, 304, 306, 308. In such examples, when the OS 600 cannot accurately recognize CPUs 302, 304, 306, 308, the OS could not accurately assign the corresponding App/VM for each of the CPUs 302, 304, 306, 308. The transaction performance between the example bridges 324 and 320, 322 are different and require different Apps/VMs, for example. In such examples, an incorrect App/VM assignment will adversely affect the performance of the example processor system 300. In some examples, App/VM assignment determines input output (IO), computing, and/or memory resources for a CPU.

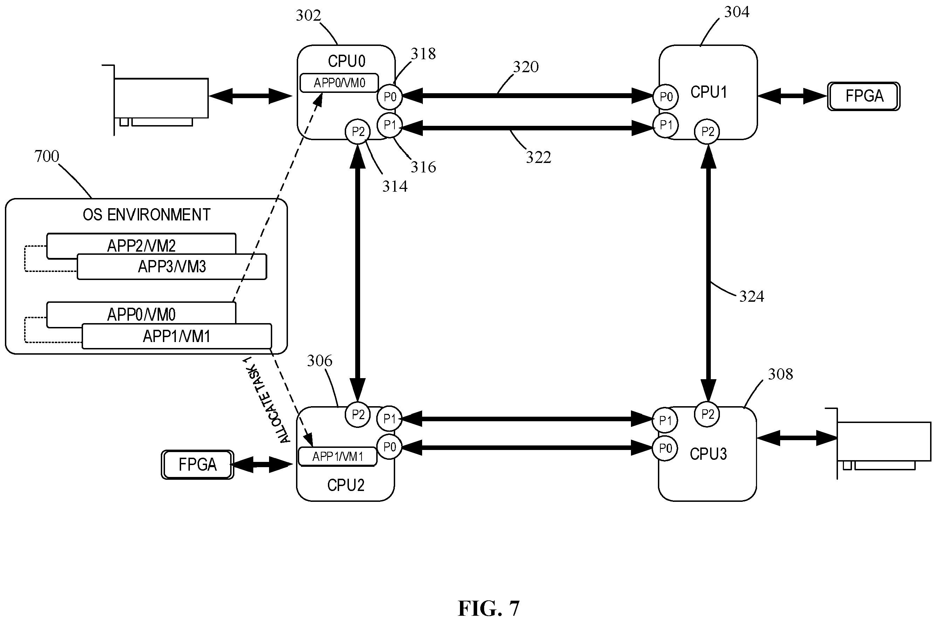

FIG. 7 is the example processor system 300 of FIG. 3 with an incorrect CPU pair assignment. For example, the example OS Environment 700 contains App/VM pairs similar to the example OS Environment 600. However, in this example, the Apps/VMs are not assigned to the correct pair of CPUs in the example processor system 300. For example, in the processor system 300, CPU0 302 and CPU1 304 require a high transaction performance and, thus, an App/VM assignment to support the high transaction performance. For example, the OS environment 700 incorrectly assigns App1/VM1 to CPU2 306 because the OS environment 700 does not accurately recognize the topology of the example processor system 300. In such examples, the performance of the example processor system 300 is adversely affected when the OS environment 700 cannot identify the topology.

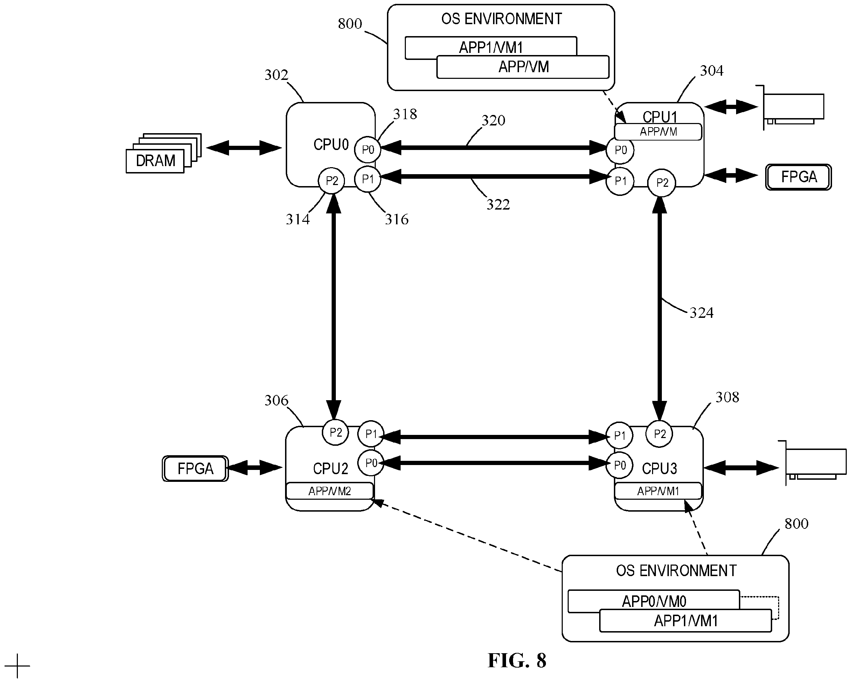

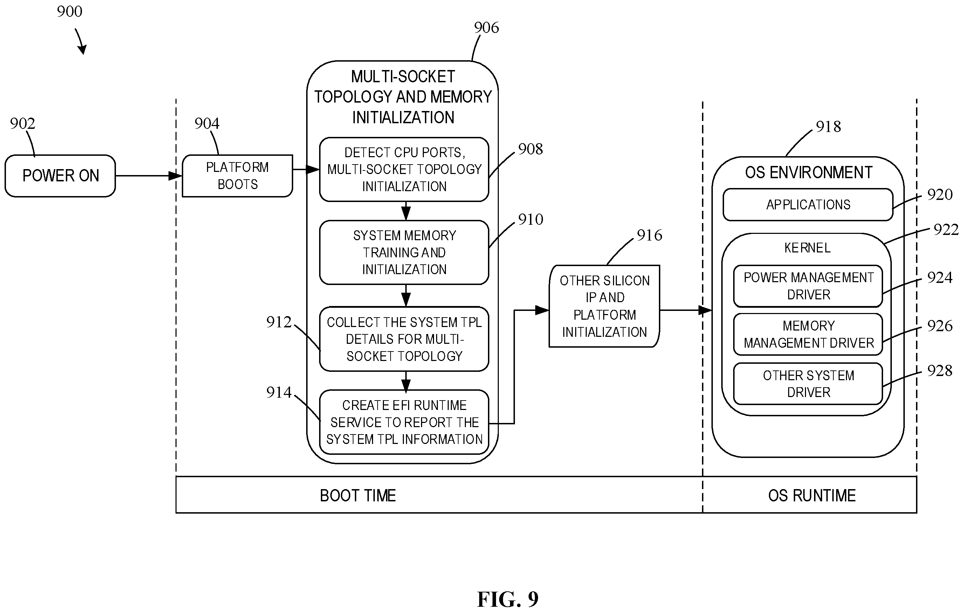

FIG. 8 is the example processor system 300 of FIG. 3 with the TPL transmitted to the OS. In the illustrated example, firmware exposes the TPL to the example OS environment 800 (further detail in FIG. 9). In the example illustrated in FIG. 8, the OS environment 800 correctly assigns Apps/VMs to CPUs 302, 304, 306, 308. For example, CPU0 302 is assigned App0/VM0, CPU1 304 is assigned App1/VM1, CPU2 306 is assigned App2/VM2, and CPU3 308 is assigned App3/VM3. Additionally or alternatively, the OS environment 800 accurately identifies the topology of the example processor system 300. In such examples, the performance of the App/VM supports the required example performance of the corresponding CPUs 302, 304, 306, 308. In some examples, the system performance of the example processor system 300 as illustrated of FIG. 8 is positively affected by the OS environment 800.

FIG. 9 is an example timing diagram 900 that illustrates an example TPL data collection flow for an example processor network. In some examples, an example Unified Extensible Firmware Interface (UEFI) runtime service solution is used to report TPL to an example OS. In the illustrated example of FIG. 9, the process begins at block 902 as the system powers on.

At block 904, when a CPU loads and executes software, the platform boots.

At block 906, a CPU executes the multi-socket topology and memory initialization phase. In some examples, multi-socket initialization includes link training, bus allocation, and IO resources assignment for each CPU.

At block 908, the CPU detector circuitry 102 detects each CPU port and identifies port topology.

At block 910, the processor system memory begins training and initialization.

At block 912, the TPL calculator circuitry 108 collects TPL for the multi-socket topology of the example processor system .

At block 914, the UEFI runtime service reports the TPL of the example processor system.

At block 916, a CPU executes other silicon initialization and platform initialization.

At block 918, a CPU loads and executes software and begins in the OS runtime of the process in the OS environment.

At block 920, the OS creates applications to support the example processor system.

At block 922, the kernel, or the core component of the example OS, converts drivers in machine language.

At block 924, the OS environment creates an example power management driver for the example processor system. At block 926, the OS environment creates an example memory management driver. At block 928, the OS environment creates any other system drivers to support the system performance of the example processor system.

In some examples, in OS runtime, an OS or a VM can invoke the runtime service to get TPL information (e.g. from the CPU port characteristics and/or the multi-socket topology) to support the OS tasks assignment.

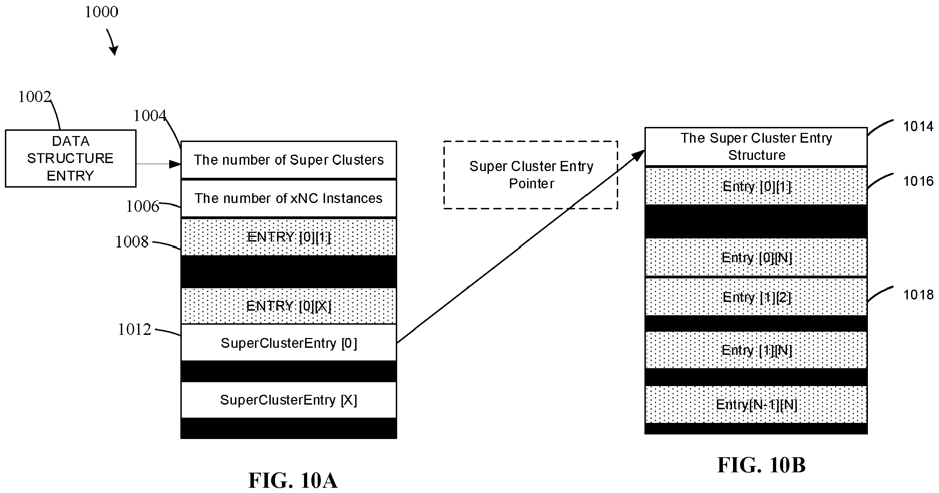

FIG. 10 is an example diagram 1000 for data structure entry for CPU port character and multi-socket topologies. In some examples, the data entry structure 1002 of FIGS. 10A and 10B illustrate the data structure of the CPU ports' characteristics and the multi-socket topology of an example processor system. Additionally or alternatively, the data structure entry 1002 illustrated in FIGS. 10A and 10B should be exposed to the OS. In some examples, the OS can then create OS level applications and/or services to leverage the system resources to improve the system performance of the example processor system. For example, the processors that are connected to an example xNC are a Super Cluster. For example, the data structure entry 1002 contains the entries of the Super Cluster 1004 and the number of xNC instances 1006. The Entry [0][1] 1008 and the Super Cluster Entry [0] 1012, as illustrated in the example in FIG 10A, are recorded and contain values for each instance in the data structure entry 1002. The Super Cluster entry 1012 connects with the Super Cluster Entry Structure 1014. The Super Cluster Entry Structure 1014 records entries of corresponding data to CPUs in the example processor system. The value of the Entry 1016, 1018 is a transaction performance level between a first CPU and a second CPU. For example, a formula for calculating entries 1016, 1018 could be for a first CPU and a second CPU is equal to a TPL link width coefficient of the first CPU multiplied by a TPL link speed coefficient of the first CPU plus a TPL link width coefficient of the second CPU multiplied by a TPL link speed coefficient of the second CPU.

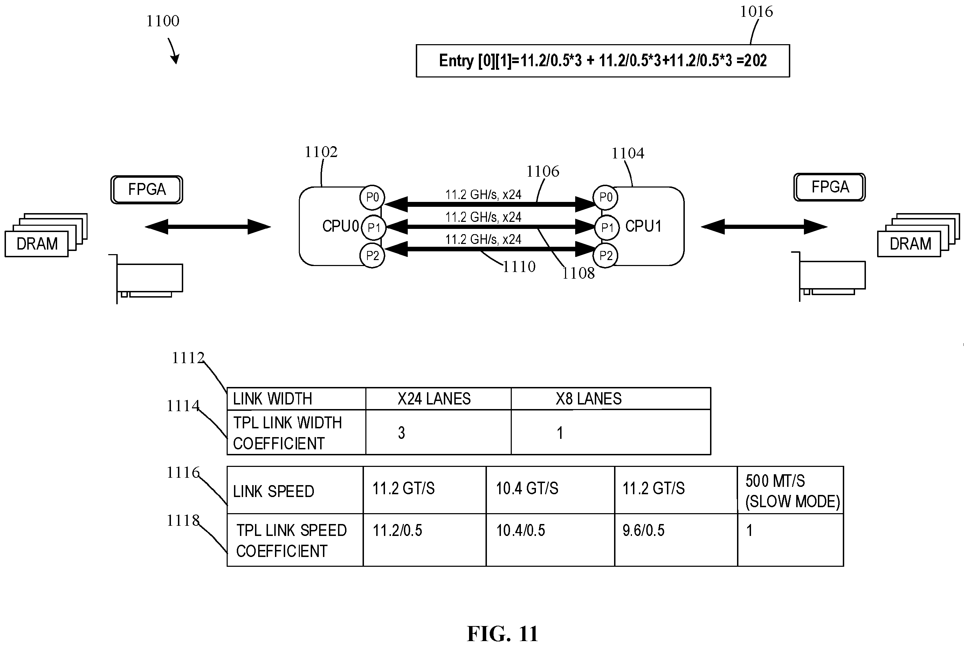

FIG. 11 is an example TPL calculation 1100 between two example CPUs. The example TPL calculation 1100 corresponds to Entry [0][1] 1016 in the example illustrated in FIG. 10. In some examples, the TPL is calculated between two corresponding CPUs (e.g. CPU0 1102 and CPU1 1104) by a number of CPU links (e.g. bridge connections) 1106, 1108, and 1110. The link width 1112 is assigned a TPL link width coefficient 1114. Additionally or alternatively, the link speed 1116 is assigned a TPL link speed coefficient 1118. The values 1112, 1114, 1116, 1118 are entered into the aforementioned example formula from the example illustrated in FIG. 10. In some examples, the formula populates the data structure entry 1002 in the example of FIG. 10.

In some examples, the example OS can characterize a precise transaction performance between the CPUs 1102 and 1104.

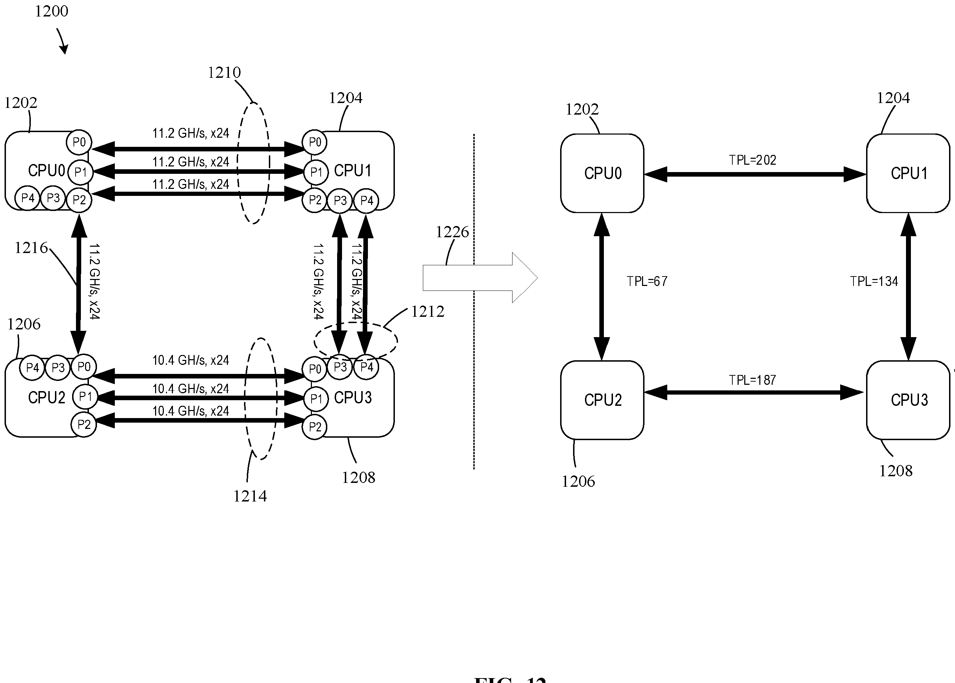

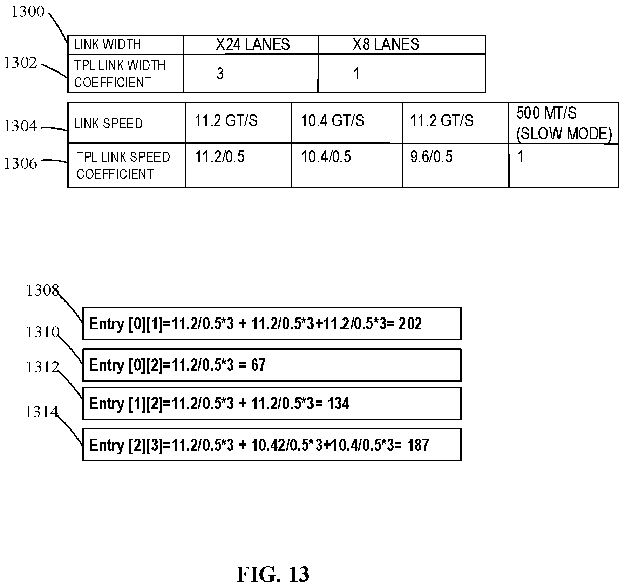

FIGS. 12 and 13 are an example TPL calculation 1200 between four example CPUs. In some examples, the TPL is calculated between four corresponding CPUs (e.g. CPU0 1202, CPU1 1204, CPU2 1206, CPU3 1208) by a number of CPU links (e.g. bridge connections) 1210, 1212, 1214 and 1216.

FIG. 13 continues the example TPL calculation 1200 of FIG. 12. The link width 1300 is assigned a TPL link width coefficient 1302. Additionally or alternatively, the link speed 1304 is assigned a TPL link speed coefficient 1306. The values 1300, 1302, 1304, 1306 are entered into the aforementioned example formula from the example illustrated in FIG. 10. In some examples, the formula populates the data structure entries 1308, 1310, 1312, and 1314 as the TPL calculates values for the example processor system illustrated in FIG. 12.

In the example processor system illustrated in FIG. 12, the CPU0 1202 and the CPU1 1204 pair has the highest transaction performance in the system with a TPL value of 202 as shown in the example calculation 1308. The CPU2 1206 and the CPU3 1208 pair has the next highest transaction performance in the system with a TPL value of 187 as shown in the example calculation 1314. The CPU1 1204 and the CPU3 1208 pair has the next highest transaction performance in the system with a TPL value of 134 as shown in the example calculation 1312. The CPU0 1202 and the CPU2 1206 pair has the lowest transaction performance in the system with a TPL value of 67 as shown in the example calculation 1310. The example OS can leverage the calculations 1308, 1310, 1312, and 1314 to collect more precise performance data among the CPUs 1202, 1204, 1206, 1208. Additionally or alternatively, can leverage the performance data among the CPUs 1202, 1204, 1206, 1208 to the OS system resources (e.g. IIO, computing and/ or memory).

While an example manner of implementing the example CPU network environment 100 is illustrated in FIG. 1, one or more of the elements, processes, and/or devices illustrated in FIG. 1may be combined, divided, re-arranged, omitted, eliminated, and/or implemented in any other way. Further, the example CPU detector circuitry 102, the example encoder circuitry 104, the example topology identifier circuitry 106, the example TPL calculator circuitry 108, the example TPL transmitter circuitry 110 and/or, more generally, the example CPU network environment 100 of FIG. 1, may be implemented by hardware, software, firmware, and/or any combination of hardware, software, and/or firmware. Thus, for example, any of the example CPU detector circuitry 102, the example encoder circuitry 104, the example topology identifier circuitry 106, the example TPL calculator circuitry 108, the example TPL transmitter circuitry 110 and/or, more generally, the example CPU network environment 100 of FIG. 1, could be implemented by processor circuitry, analog circuit(s), digital circuit(s), logic circuit(s), programmable processor(s), programmable microcontroller(s), graphics processing unit(s) (GPU(s)), digital signal processor(s) (DSP(s)), application specific integrated circuit(s) (ASIC(s)), programmable logic device(s) (PLD(s)), and/or field programmable logic device(s) (FPLD(s)) such as Field Programmable Gate Arrays (FPGAs). When reading any of the apparatus or system claims of this patent to cover a purely software and/or firmware implementation, at least one of the example CPU detector circuitry 102, the example encoder circuitry 104, the example topology identifier circuitry 106, the example TPL calculator circuitry 108, and/or the example TPL transmitter circuitry 110 is/are hereby expressly defined to include a non-transitory computer readable storage device or storage disk such as a memory, a digital versatile disk (DVD), a compact disk (CD), a Blu-ray disk, etc., including the software and/or firmware. Further still, the example CPU network environment 100 of FIG. 1 may include one or more elements, processes, and/or devices in addition to, or instead of, those illustrated in FIG. 1, and/or may include more than one of any or all of the illustrated elements, processes and devices.

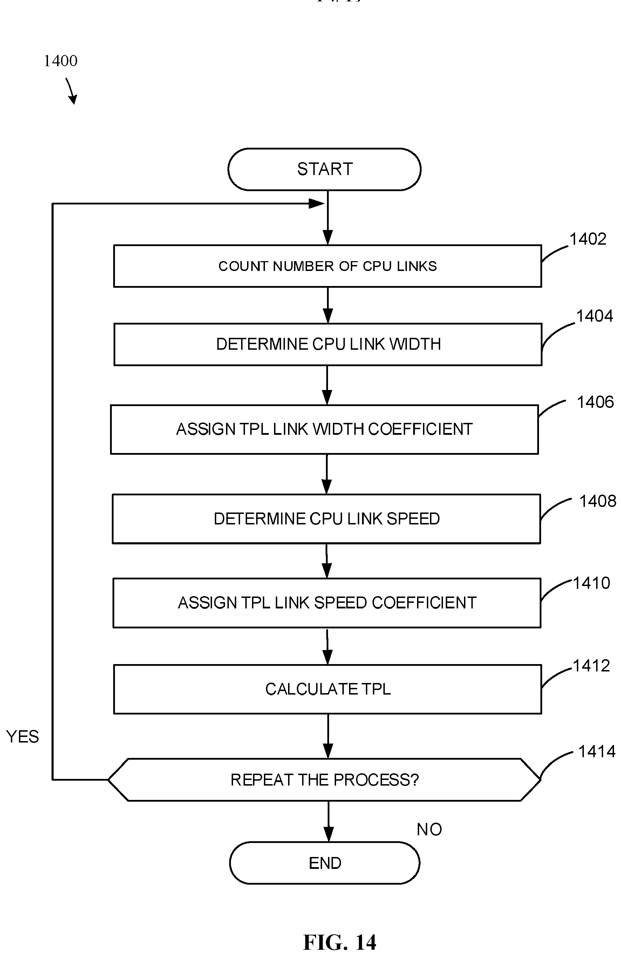

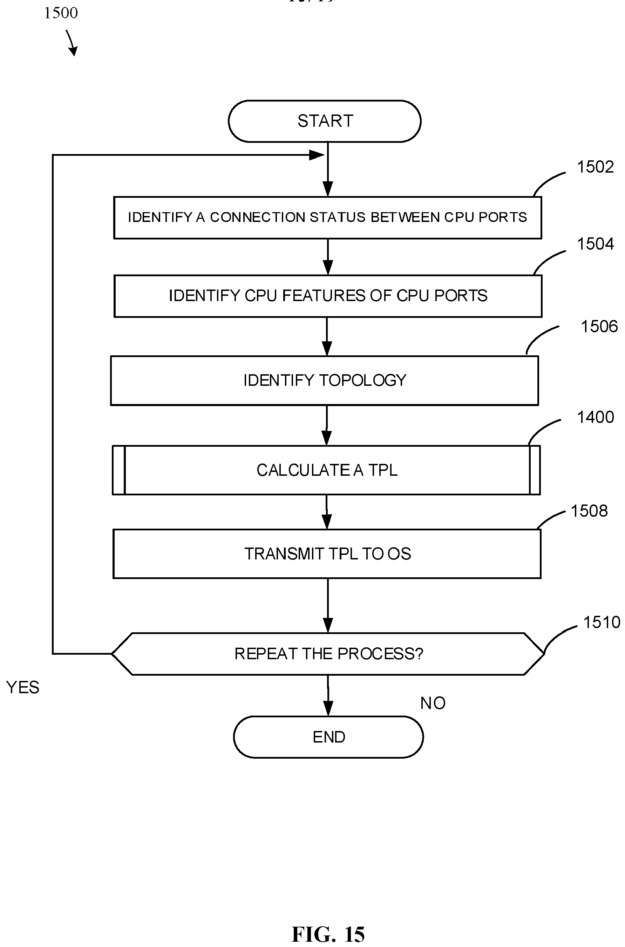

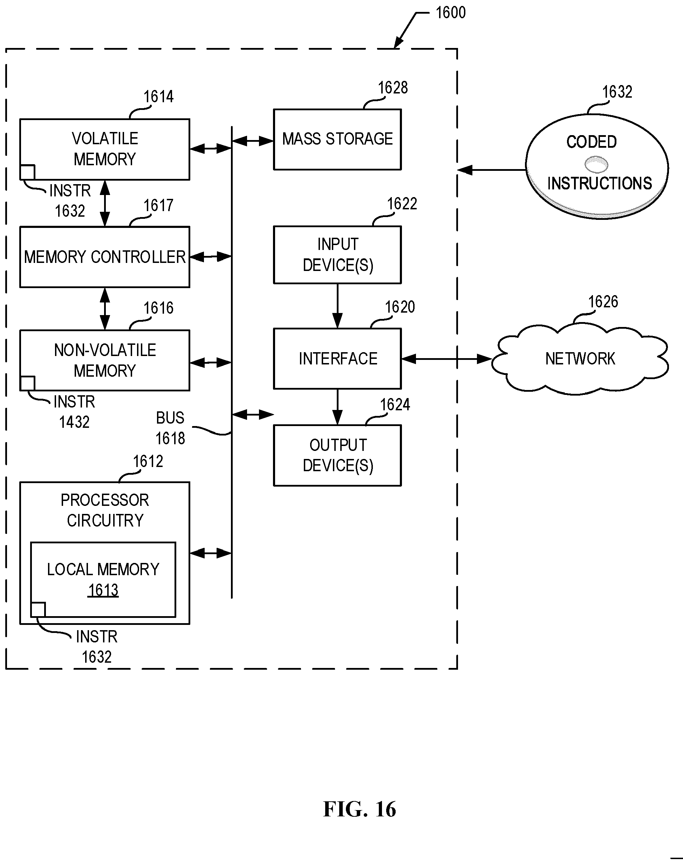

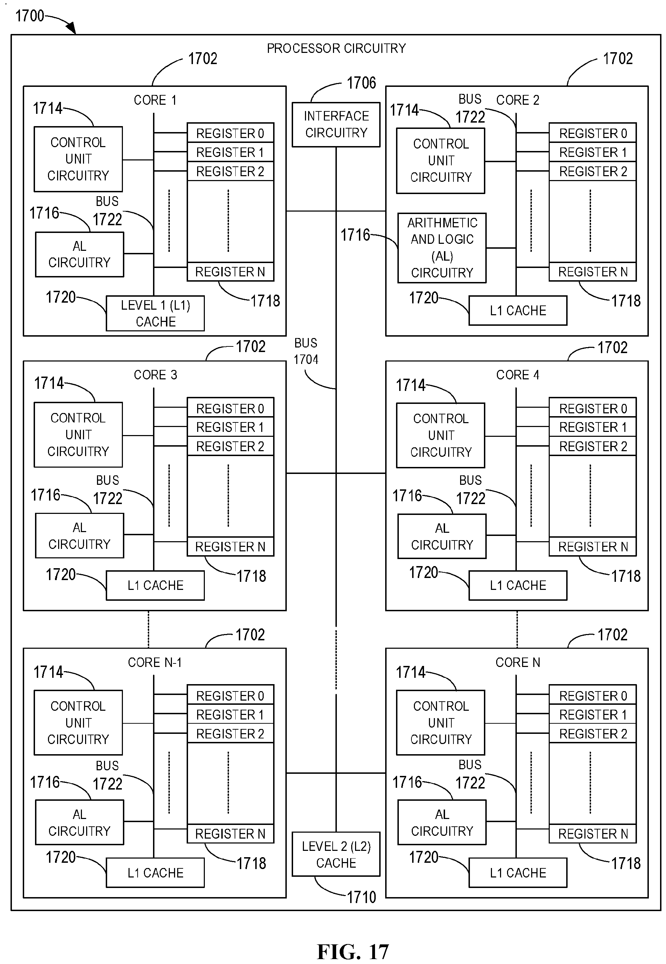

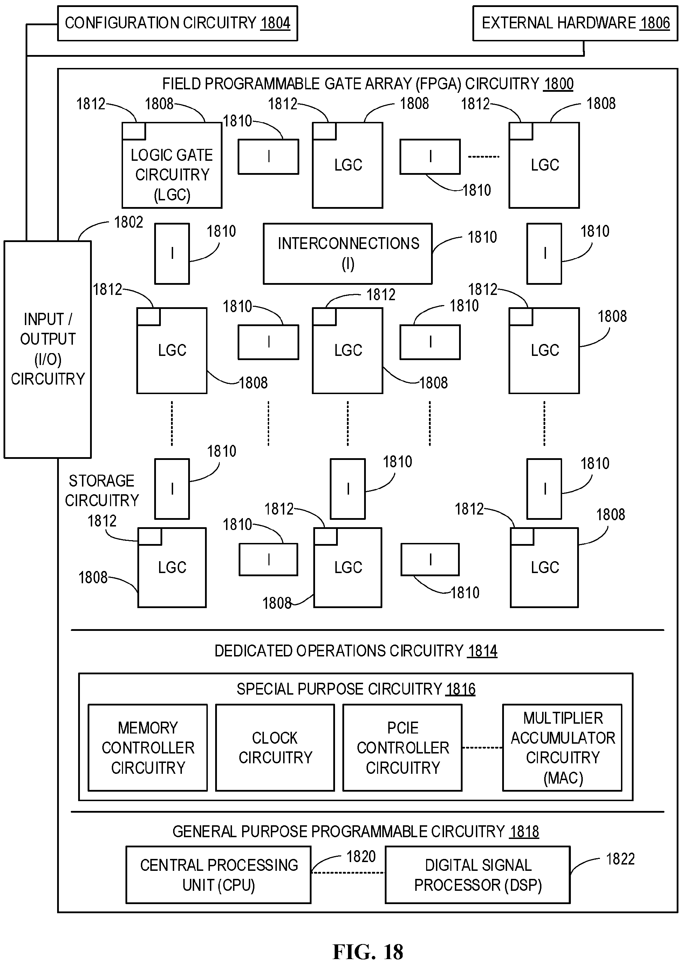

Flowcharts representative of example hardware logic circuitry, machine readable instructions, hardware implemented state machines, and/or any combination thereof for implementing the apparatus 100 of FIG. 1 are shown in FIGS. 14 and 15. The machine readable instructions may be one or more executable programs or portion(s) of an executable program for execution by processor circuitry, such as the processor circuitry 1612 shown in the example processor platform 1600 discussed below in connection with FIG. 16 and/or the example processor circuitry discussed below in connection with FIGS. 17 and/or 18. The program may be embodied in software stored on one or more non-transitory computer readable storage media such as a CD, a floppy disk, a hard disk drive (HDD), a DVD, a Blu-ray disk, a volatile memory (e.g., Random Access Memory (RAM) of any type, etc.), or a non-volatile memory (e.g., FLASH memory, an HDD, etc.) associated with processor circuitry located in one or more hardware devices, but the entire program and/or parts thereof could alternatively be executed by one or more hardware devices other than the processor circuitry and/or embodied in firmware or dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a user) or an intermediate client hardware device (e.g., a radio access network (RAN) gateway that may facilitate communication between a server and an endpoint client hardware device). Similarly, the non-transitory computer readable storage media may include one or more mediums located in one or more hardware devices. Further, although the example program is described with reference to the flowcharts illustrated in FIGS. 14 and 15, many other methods of implementing the example CPU network environment 100 may alternatively be used. For example, the order of execution of the blocks may be changed, and/or some of the blocks described may be changed, eliminated, or combined. Additionally or alternatively, any or all of the blocks may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more hardware devices (e.g., a single-core processor (e.g., a single core central processor unit (CPU)), a multi-core processor (e.g., a multi-core CPU), etc.) in a single machine, multiple processors distributed across multiple servers of a server rack, multiple processors distributed across one or more server racks, a CPU and/or a FPGA located in the same package (e.g., the same integrated circuit (IC) package or in two or more separate housings, etc.).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., as portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of machine executable instructions that implement one or more operations that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc., in order to execute the machine readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 14-17 may be implemented using executable instructions (e.g., computer and/or machine readable instructions) stored on one or more non-transitory computer and/or machine readable media such as optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms non-transitory computer readable medium and non-transitory computer readable storage medium is expressly defined to include any type of computer readable storage device and/or storage disk and to exclude propagating signals and to exclude transmission media.

"Including and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements or method actions may be implemented by, e.g., the same entity or object. Additionally, although individual features may be included in different examples or claims, these may possibly be combined, and the inclusion in different examples or claims does not imply that a combination of features is not feasible and/or advantageous.

FIG. 14 is a flowchart representative of example machine readable instructions 1400 that may be executed by example processor circuitry to implement the example TPL calculation of FIG. 11.

At block 1402, the CPU detector circuitry 102 counts a number of CPU links is between CPUs of an example CPU network. In some examples, the example CPU detector circuitry 102 determines the connection status of the CPU links 1106, 1108, 1110.

At block 1404, the encoder circuitry 104 determines CPU link width of the CPU ports. In some examples, a CPU feature is a link width. In some examples the example encoder circuitry 104 identifies the CPU features in the example CPU network. In the example TPL calculation 1100 in FIG. 11, the CPU link width is x24 lanes and/or x8 lanes.

At block 1406, the TPL calculator circuitry 108 assigns the CPU link a TPL link width coefficient. In some examples, the TPL link width coefficient is a value used to calculate a TPL. In the example TPL calculation 1100 in FIG. 11, the CPU link width coefficient is 3 and/or 1.

At block 1408, the encoder circuitry 104 determines a CPU link speed of the CPU ports. In some examples, a CPU feature is a link speed. In some examples the example encoder circuitry 104 identifies the CPU features in the example CPU network. In the example TPL calculation 1100 in FIG. 11, the CPU link speed is 11.2 GT/s, 10.4 GT/s, and/or 500 MT/s (e.g., slow mode).

At block 1410, the TPL calculator circuitry 108 assigns the CPU link a TPL link speed coefficient. In some examples, the TPL link speed coefficient is a value used to calculate a TPL. In the example TPL calculation 1100 in FIG. 11, the CPU link speed coefficient is 11.2/0.5, 10.4/0.5, 9.6/0.5 and/or 1.

At block 1412, the TPL calculator circuitry 108 calculates a TPL. In some examples, each of the CPU links has a TPL calculation. For example, in the illustrated example of FIG. 11, the CPU links 1106, 1108, 1110 each have a TPL calculation and a corresponding TPL. In some examples, the TPL calculator circuitry 108 calculates the TPL for the CPU links in the example CPU network.

At block 1414, it is determined whether the process is to be repeated. If not, the process ends.

FIG. 15 is a flowchart representative of example machine readable instructions 1500 that may be executed by example processor circuitry to implement the example process system of FIG. 8.

At block 1502, the example CPU detector circuitry 102 determines the connection status between CPU ports of an example CPU network.

At block 1504, the example encoder circuitry 104 identifies CPU features of the CPU ports. In some examples, a CPU feature is at least one of a link speed and a link width.

At block 1506, the topology identifier circuitry 106 identifies a topology of the CPU network. In some examples, the topology is a heterogeneous (e.g., unbalanced) multi-socket topology. In other examples, the topology is a symmetrical (e.g., balanced) multi-socket topology.

At block 1400, the subprocess 1400 of FIG 14. the TPL calculator circuitry 108 calculates a TPL for the CPU links in the example CPU network. In some examples, each of the CPU links (e.g., bridge connection) has a TPL calculation.

At block 1508, the TPL transmitter circuitry 110 transmits the TPL to the OS 112.

At block 1510, the process is determined whether to be repeated. If not, the process ends.

FIG. 16 is a block diagram of an example processor platform 1600 structured to execute and/or instantiate the machine readable instructions and/or operations of FIGS. 14-15 to implement the apparatus of FIG. 1. The processor platform 1600 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing device.

The processor platform 1600 of the illustrated example includes processor circuitry 1612. The processor circuitry 1612 of the illustrated example is hardware. For example, the processor circuitry 1612 can be implemented by one or more integrated circuits, logic circuits, FPGAs microprocessors, CPUs, GPUs, DSPs, and/or microcontrollers from any desired family or manufacturer. The processor circuitry 1612 may be implemented by one or more semiconductor based (e.g., silicon based) devices. In this example, the processor circuitry 1612 implements the example CPU detector circuitry 102, the example encoder circuitry 104, the example topology identifier circuitry 106, the example TPL calculator circuitry 108, and/or the example TPL transmitter circuitry 110.

The processor circuitry 1612 of the illustrated example includes a local memory 1613 (e.g., a cache, registers, etc.). The processor circuitry 1612 of the illustrated example is in communication with a main memory including a volatile memory 1614 and a non-volatile memory 1616 by a bus 1618. The volatile memory 1614 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 1616 may be implemented by flash memory and/or any other desired type of memory device. Access to the main memory 1614, 1616 of the illustrated example is controlled by a memory controller 1617.

The processor platform 1600 of the illustrated example also includes interface circuitry 1620. The interface circuitry 1620 may be implemented by hardware in accordance with any type of interface standard, such as an Ethernet interface, a universal serial bus (USB) interface, a Bluetooth^{®} interface, a near field communication (NFC) interface, a PCI interface, and/or a PCIe interface.

In the illustrated example, one or more input devices 1622 are connected to the interface circuitry 1620. The input device(s) 1622 permit(s) a user to enter data and/or commands into the processor circuitry 612. The input device(s) 1622 can be implemented by, for example, an audio sensor, a microphone, a camera (still or video), a keyboard, a button, a mouse, a touchscreen, a track-pad, a trackball, an isopoint device, and/or a voice recognition system.

One or more output devices 1624 are also connected to the interface circuitry 1620 of the illustrated example. The output devices 1624 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 1620 of the illustrated example, thus, typically includes a graphics driver card, a graphics driver chip, and/or graphics processor circuitry such as a GPU.

The interface circuitry 1620 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1626. The communication can be by, for example, an Ethernet connection, a digital subscriber line (DSL) connection, a telephone line connection, a coaxial cable system, a satellite system, a line-of-site wireless system, a cellular telephone system, an optical connection, etc.

The processor platform 1600 of the illustrated example also includes one or more mass storage devices 1628 to store software and/or data. Examples of such mass storage devices 1628 include magnetic storage devices, optical storage devices, floppy disk drives, HDDs, CDs, Blu-ray disk drives, redundant array of independent disks (RAID) systems, solid state storage devices such as flash memory devices, and DVD drives.

The machine executable instructions 1632, which may be implemented by the machine readable instructions of FIG. 16 may be stored in the mass storage device 1628, in the volatile memory 1614, in the non-volatile memory 1616, and/or on a removable non-transitory computer readable storage medium such as a CD or DVD

FIG. 17 is a block diagram of an example implementation of the processor circuitry 1612 of FIG. 16. In this example, the processor circuitry 1612 of FIG. 16 is implemented by a microprocessor 1700. For example, the microprocessor 1600 may implement multi-core hardware circuitry such as a CPU, a DSP, a GPU, an XPU, etc. Although it may include any number of example cores 1702 (e.g., 1 core), the microprocessor 1700 of this example is a multi-core semiconductor device including N cores. The cores 1702 of the microprocessor 1700 may operate independently or may cooperate to execute machine readable instructions. For example, machine code corresponding to a firmware program, an embedded software program, or a software program may be executed by one of the cores 1702 or may be executed by multiple ones of the cores 1702 at the same or different times. In some examples, the machine code corresponding to the firmware program, the embedded software program, or the software program is split into threads and executed in parallel by two or more of the cores 1702. The software program may correspond to a portion or all of the machine readable instructions and/or operations represented by the flowchart of FIG. 17.

The cores 1702 may communicate by an example bus 1704. In some examples, the bus 1704 may implement a communication bus to effectuate communication associated with one(s) of the cores 1702. For example, the bus 1704 may implement at least one of an Inter-Integrated Circuit (I2C) bus, a Serial Peripheral Interface (SPI) bus, a PCI bus, or a PCIe bus. Additionally or alternatively, the bus 1704 may implement any other type of computing or electrical bus. The cores 1702 may obtain data, instructions, and/or signals from one or more external devices by example interface circuitry 1706. The cores 1702 may output data, instructions, and/or signals to the one or more external devices by the interface circuitry 1706. Although the cores 1702 of this example include example local memory 1720 (e.g., Level 1 (LI) cache that may be split into an L1 data cache and an L1 instruction cache), the microprocessor 1700 also includes example shared memory 1710 that may be shared by the cores (e.g., Level 2 (L2_ cache)) for high-speed access to data and/or instructions. Data and/or instructions may be transferred (e.g., shared) by writing to and/or reading from the shared memory 1710. The local memory 1720 of each of the cores 1702 and the shared memory 1710 may be part of a hierarchy of storage devices including multiple levels of cache memory and the main memory (e.g., the main memory 1614, 1616 of FIG. 16). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1702 may be referred to as a CPU, DSP, GPU, etc., or any other type of hardware circuitry. Each core 1702 includes control unit circuitry 1714, arithmetic and logic (AL) circuitry (sometimes referred to as an ALU) 1716, a plurality of registers 1718, the L1 cache 1720, and an example bus 1722. Other structures may be present. For example, each core 1702 may include vector unit circuitry, single instruction multiple data (SIMD) unit circuitry, load/store unit (LSU) circuitry, branch/jump unit circuitry, floating-point unit (FPU) circuitry, etc. The control unit circuitry 1714 includes semiconductor-based circuits structured to control (e.g., coordinate) data movement within the corresponding core 1702. The AL circuitry 1716 includes semiconductor-based circuits structured to perform one or more mathematic and/or logic operations on the data within the corresponding core 1702. The AL circuitry 1716 of some examples performs integer based operations. In other examples, the AL circuitry 1716 also performs floating point operations. In yet other examples, the AL circuitry 1716 may include first AL circuitry that performs integer based operations and second AL circuitry that performs floating point operations. In some examples, the AL circuitry 1716 may be referred to as an Arithmetic Logic Unit (ALU). The registers 1718 are semiconductor-based structures to store data and/or instructions such as results of one or more of the operations performed by the AL circuitry 1716 of the corresponding core 1702. For example, the registers 1718 may include vector register(s), SIMD register(s), general purpose register(s), flag register(s), segment register(s), machine specific register(s), instruction pointer register(s), control register(s), debug register(s), memory management register(s), machine check register(s), etc. The registers 1718 may be arranged in a bank as shown in FIG. 17. Alternatively, the registers 1718 may be organized in any other arrangement, format, or structure including distributed throughout the core 1702 to shorten access time. The bus 1720 may implement at least one of an I2C bus, a SPI bus, a PCI bus, or a PCIe bus.

Each core 1702 and/or, more generally, the microprocessor 1700 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1700 is a semiconductor device fabricated to include many transistors interconnected to implement the structures described above in one or more integrated circuits (ICs) contained in one or more packages. The processor circuitry may include and/or cooperate with one or more accelerators. In some examples, accelerators are implemented by logic circuitry to perform certain tasks more quickly and/or efficiently than can be done by a general purpose processor. Examples of accelerators include ASICs and FPGAs such as those discussed herein. A GPU or other programmable device can also be an accelerator. Accelerators may be on-board the processor circuitry, in the same chip package as the processor circuitry and/or in one or more separate packages from the processor circuitry.

FIG. 18 is a block diagram of another example implementation of the processor circuitry 1612 of FIG. 16. In this example, the processor circuitry 1812 is implemented by FPGA circuitry 1800. The FPGA circuitry 1800 can be used, for example, to perform operations that could otherwise be performed by the example microprocessor 1700 of FIG. 17 executing corresponding machine readable instructions. However, once configured, the FPGA circuitry 1800 instantiates the machine readable instructions in hardware and, thus, can often execute the operations faster than they could be performed by a general purpose microprocessor executing the corresponding software.

More specifically, in contrast to the microprocessor 1700 of FIG. 17 described above (which is a general purpose device that may be programmed to execute some or all of the machine readable instructions represented by the flowcharts of FIGS. 14-15 but whose interconnections and logic circuitry are fixed once fabricated), the FPGA circuitry 1800 of the example of FIG. 18 includes interconnections and logic circuitry that may be configured and/or interconnected in different ways after fabrication to instantiate, for example, some or all of the machine readable instructions represented by the flowcharts of FIG. 14-15. In particular, the FPGA 1800 may be thought of as an array of logic gates, interconnections, and switches. The switches can be programmed to change how the logic gates are interconnected by the interconnections, effectively forming one or more dedicated logic circuits (unless and until the FPGA circuitry 1800 is reprogrammed). The configured logic circuits enable the logic gates to cooperate in different ways to perform different operations on data received by input circuitry. Those operations may correspond to some or all of the software represented by the flowcharts of FIG. 14-15. As such, the FPGA circuitry 1800 may be structured to effectively instantiate some or all of the machine readable instructions of the flowcharts of FIG. 14-15 as dedicated logic circuits to perform the operations corresponding to those software instructions in a dedicated manner analogous to an ASIC. Therefore, the FPGA circuitry 1800 may perform the operations corresponding to the some or all of the machine readable instructions of FIG. 18 faster than the general purpose microprocessor can execute the same.

In the example of FIG. 18, the FPGA circuitry 1800 is structured to be programmed (and/or reprogrammed one or more times) by an end user by a hardware description language (HDL) such as Verilog. The FPGA circuitry 1800 of FIG. 18, includes example input/output (I/O) circuitry 1802 to obtain and/or output data to/from example configuration circuitry 1804 and/or external hardware (e.g., external hardware circuitry) 1806. For example, the configuration circuitry 1804 may implement interface circuitry that may obtain machine readable instructions to configure the FPGA circuitry 1800, or portion(s) thereof. In some such examples, the configuration circuitry 1804 may obtain the machine readable instructions from a user, a machine (e.g., hardware circuitry (e.g., programmed or dedicated circuitry) that may implement an Artificial Intelligence/Machine Learning (AI/ML) model to generate the instructions), etc. In some examples, the external hardware 1806 may implement the microprocessor 1700 of FIG. 17. The FPGA circuitry 1800 also includes an array of example logic gate circuitry 1808, a plurality of example configurable interconnections 1810, and example storage circuitry 1812. The logic gate circuitry 1808 and interconnections 1810 are configurable to instantiate one or more operations that may correspond to at least some of the machine readable instructions of FIG. 18and/or other desired operations. The logic gate circuitry 1808 shown in FIG. 18 is fabricated in groups or blocks. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1808 to enable configuration of the electrical structures and/or the logic gates to form circuits to perform desired operations. The logic gate circuitry 1808 may include other electrical structures such as look-up tables (LUTs), registers (e.g., flip-flops or latches), multiplexers, etc.

The interconnections 1810 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1808 to program desired logic circuits.

The storage circuitry 1812 of the illustrated example is structured to store result(s) of the one or more of the operations performed by corresponding logic gates. The storage circuitry 1812 may be implemented by registers or the like. In the illustrated example, the storage circuitry 1812 is distributed amongst the logic gate circuitry 1808 to facilitate access and increase execution speed.

The example FPGA circuitry 1800 of FIG. 18 also includes example Dedicated Operations Circuitry 1814. In this example, the Dedicated Operations Circuitry 1814 includes special purpose circuitry 1816 that may be invoked to implement commonly used functions to avoid the need to program those functions in the field. Examples of such special purpose circuitry 1816 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1800 may also include example general purpose programmable circuitry 1818 such as an example CPU 1820 and/or an example DSP 1822. Other general purpose programmable circuitry 1800 may additionally or alternatively be present such as a GPU, an XPU, etc., that can be programmed to perform other operations.

Although FIGS. 17 and 18 illustrate two example implementations of the processor circuitry 1612 of FIG. 16, many other approaches are contemplated. For example, as mentioned above, modern FPGA circuitry may include an on-board CPU, such as one or more of the example CPU 1820 of FIG. 18. Therefore, the processor circuitry 1612 of FIG. 16 may additionally be implemented by combining the example microprocessor 1600 of FIG. 16 and the example FPGA circuitry 1800 of FIG. 18. In some such hybrid examples, a first portion of the machine readable instructions represented by the flowcharts of FIGS. 14-15 may be executed by one or more of the cores 1702 of FIG. 17 and a second portion of the machine readable instructions represented by the flowcharts of FIG. 14-15 may be executed by the FPGA circuitry 1800 of FIG. 8.

In some examples, the processor circuitry 1612 of FIG. 16 may be in one or more packages. For example, the processor circuitry 1700 of FIG. 17 and/or the FPGA circuitry 1800 of FIG. 18 may be in one or more packages. In some examples, an XPU may be implemented by the processor circuitry 1612 of FIG. 16, which may be in one or more packages. For example, the XPU may include a CPU in one package, a DSP in another package, a GPU in yet another package, and an FPGA in still yet another package.

A block diagram illustrating an example software distribution platform 1905 to distribute software such as the example machine readable instructions 1632 of FIG. 16 to hardware devices owned and/or operated by third parties is illustrated in FIG. 16. The example software distribution platform 1905 may be implemented by any computer server, data facility, cloud service, etc., capable of storing and transmitting software to other computing devices. The third parties may be customers of the entity owning and/or operating the software distribution platform 1905. For example, the entity that owns and/or operates the software distribution platform 1905 may be a developer, a seller, and/or a licensor of software such as the example machine readable instructions 1632 of FIG. 16. The third parties may be consumers, users, retailers, OEMs, etc., who purchase and/or license the software for use and/or re-sale and/or sub-licensing. In the illustrated example, the software distribution platform 1905 includes one or more servers and one or more storage devices. The storage devices store the machine readable instructions 1632, which may correspond to the example machine readable instructions 1632 of FIG. 16, as described above. The one or more servers of the example software distribution platform 1905 are in communication with a network 1910, which may correspond to any one or more of the Internet and/or any of the example networks 1910 described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 1632 from the software distribution platform 1905. For example, the software, which may correspond to the example machine readable instructions 1400, 1500 of FIGS. 14-15 may be downloaded to the example processor platform 1600, which is to execute the machine readable instructions 1632 to implement the flowcharts of FIGS. 14-15. In some examples, one or more servers of the software distribution platform 1905 periodically offer, transmit, and/or force updates to the software (e.g., the example machine readable instructions 1632 of FIG. 16) to ensure improvements, patches, updates, etc., are distributed and applied to the software at the end user devices.

From the foregoing, it will be appreciated that example systems, methods, apparatus, and articles of manufacture have been disclosed that transmit CPU performance information to an OS.

The disclosed systems, methods, apparatus, and articles of manufacture improve the efficiency of using a computing device by transmitting CPU performance information to an OS. The disclosed systems, methods, apparatus, and articles of manufacture are accordingly directed to one or more improvement(s) in the operation of a machine such as a computer or other electronic and/or mechanical device.

The examples disclosed herein include a transaction performance level that can notify an OS or any other system or service with information about a CPU network. Examples disclosed herein collect information about CPU ports' characteristics and the CPU network topology so the OS can improve transaction performance in the CPU network.

Examples disclosed herein calculate a Transaction Performance Level (TPL) for an example CPU port network and/or pairing.

Examples disclosed herein achieve the above benefits by utilizing CPU port features and topology information of the CPU network. For example, a TPL is generated based on at least one of a connection status between CPU ports, CPU port features, and/or a network topology. In some examples, the TPL is transmitted to the OS.

Example 1 includes an apparatus comprising interface circuitry; and processor circuitry including one or more of: at least one of a central processing unit (CPU), a graphic processing unit or a digital signal processor, the at least one of the central processing unit, the graphic processing unit or the digital signal processor having control circuitry to control data movement within the processor circuitry, arithmetic and logic circuitry to perform one or more first operations corresponding to instructions, and one or more registers to store a result of the one or more first operations, the instructions in the apparatus; a Field Programmable Gate Array (FPGA), the FPGA including logic gate circuitry, a plurality of configurable interconnections, and storage circuitry, the logic gate circuitry and interconnections to perform one or more second operations, the storage circuitry to store a result of the one or more second operations; or Application Specific Integrate Circuitry (ASIC) including logic gate circuitry to perform one or more third operations; the processor circuitry to perform at least one of the first operations, the second operations or the third operations to: a CPU detector circuitry to determine, in a central processing unit (CPU) network, a connection status between a first CPU port on a first processor and a second CPU port on a second processor, an encoder circuitry to generate a first CPU identifier for the first CPU port and a second CPU identifier for the second CPU port, a topology identifier circuitry to identify a topology of the CPU network based on the connection status and the CPU identifiers, a transaction performance level (TPL) calculator circuitry to calculate a TPL based on at least one of the connection status, the first CPU identifier, the second CPU identifier, and a topology identifier circuitry, and a TPL transmitter circuitry to transmit the TPL to an operating system (OS).

Example 2 includes the apparatus as defined in example 1, wherein the CPU identifiers are at least one of a number of CPU ports, a bandwidth, and a speed.

Example 3 includes the apparatus as defined in example 1, further including identifying a topology of the CPU network to include system memory training.

Example 4 includes the apparatus as defined in example 1, wherein the TPL is performance data based on at least one of a number of CPU ports between the first processor and the second processor, a link speed of the number of CPU ports, and a link width of the number of CPU ports.

Example 5 includes the apparatus as defined in example 1, wherein transmitting the TPL to the OS includes transmission via a Unified Extensible Firmware Interface (UEFI) runtime service solution, wherein the UEFI runtime service solution collects TPL for the topology.

Example 6 includes the apparatus as defined in example 5, wherein the UEFI runtime service solution receives a request for TPL from the OS.

Example 7 includes the apparatus as defined in example 6, wherein the topology is at least one of a heterogeneous multi-socket topology or a symmetrical multi-socket topology.

Example 8 includes the apparatus as defined in example 1, wherein the connection status represents an error between the first and the second CPU ports.

Example 9 includes the apparatus as defined in example 8, wherein the error represents a broken CPU link.

Example 10 includes the apparatus as defined in 8, further including the error to change the topology from a balanced multi-socket topology to an unbalanced multi-socket topology.

Example 11 includes the apparatus as defined in example 10, further including the error to maintain the balanced multi-socket topology.

Example 12 includes a method comprising: identifying, in a central processing unit (CPU) network, a connection status between a first CPU port on a first processor and a second CPU port on a second processor, identifying CPU features of the first and the second CPU ports, identifying a topology of the CPU network based on the connection status and the CPU features, calculating a transaction performance level (TPL) based on at least one of the connection status, the CPU features, and the topology, and transmitting the TPL to an operating system (OS).

Example 13 includes the method as described in example 12, wherein the CPU features are at least one of a number of CPU ports, a bandwidth, and a speed.

Example 14 includes the method as described in example 12, wherein identifying the topology of the CPU network includes system memory training.

Example 15 includes the method as described in example 12, wherein the TPL is performance data based on at least one of a number of CPU ports between the first processor and the second processor, a link speed of the number of CPU ports, and a link width of the number of CPU ports.

Example 16 includes the method as described in example 12, wherein transmitting the TPL to the OS includes transmission via a Unified Extensible Firmware Interface (UEFI) runtime service solution, wherein the UEFI runtime service solution collects the TPL for the topology.

Example 17 includes the method as described in example 16, wherein the UEFI runtime service solution receives a request for TPL from the OS.

Example 18 includes the method as described in example 14, wherein the topology is at least one of a heterogeneous multi-socket topology or a symmetrical multi-socket topology.

Example 19 includes the method as described in example 12, wherein the connection status represents an error between the first and the second CPU ports.

Example 20 includes the method as described in example 19, wherein the error represents a broken CPU link.

Example 21 includes the method as described in example 19, further including the error to change the topology from a symmetrical multi-socket topology to a heterogeneous multi-socket topology.

Example 22 includes the method as described in example 21, further including the error to maintain the symmetrical multi-socket topology.

Example 23 includes a non-transitory computer-readable medium comprising instructions that, when executed, cause at least one processor to: identify, in a central processing unit (CPU) network, a connection status between a first CPU port on a first processor and a second CPU port on a second processor, identify CPU features of the first and the second CPU port, identify a topology of the CPU network based on the connection status and the CPU features, calculate a transaction performance level (TPL) based on at least one of the connection status, the CPU features, and the topology, and transmit the TPL to an operating system (OS).

Example 24 includes the non-transitory computer readable medium as described in example 23, wherein the CPU features are at least one of a number of CPU ports, a bandwidth, and a speed.

Example 25 includes the non-transitory computer readable medium as described in example 23, further including identifying a topology of the CPU network to include system memory training.

Example 26 includes the non-transitory computer readable medium as described in example 23, wherein the TPL is performance data based on at least one of a number of CPU ports between the first processor and the second processor, a link speed of the number of CPU ports, and a link width of the number of CPU ports.

Example 27 includes the non-transitory computer readable medium as described in example 23, wherein transmitting the TPL to the OS includes transmission via a Unified Extensible Firmware Interface (UEFI) runtime service solution, wherein the UEFI runtime service solution collects the TPL for the topology.

Example 28 includes the non-transitory computer readable medium as described in example 27, wherein the instructions, when executed, cause at least one processor to request the TPL details via the UEFI runtime service solution.

Example 29 includes the non-transitory computer readable medium as described in example 23, wherein the topology is at least one of a heterogeneous multi-socket topology or a symmetrical multi-socket topology.

Example 30 includes the non-transitory computer readable medium as described in example 23, wherein at least one of the first or the second CPU port is an invalid port.

Example 31 includes the non-transitory computer readable medium as described in example 30, wherein the invalid port is a broken CPU link.

Example 32 includes the non-transitory computer readable medium as described in example 30, wherein the invalid port is to represent a symmetrical multi-socket topology as a heterogeneous multi-socket topology to the OS.

Example 33 includes the non-transitory computer readable medium as described in example 32, further including the invalid port to maintain the symmetrical multi-socket topology.

Although certain example systems, methods, apparatus, and articles of manufacture have been disclosed herein, the scope of coverage of this patent is not limited thereto. On the contrary, this patent covers all systems, methods, apparatus, and articles of manufacture fairly falling within the scope of the claims of this patent.

The following claims are hereby incorporated into this Detailed Description by this reference, with each claim standing on its own.

## Claims

1. A method comprising:
identifying, in a central processing unit (CPU) network, a connection status between at least one of a first CPU port on a first processor and a second CPU port on a second processor;
identifying CPU features of the first and the second CPU ports;
identifying a topology of the CPU network based on the connection status and the CPU features;
calculating a transaction performance level (TPL) based on at least one of the connection status, the CPU features, and the topology; and
transmitting the TPL to an operating system (OS).

2. The method of claim 1, wherein the CPU features are at least one of a number of CPU ports, a bandwidth, and a speed.

3. The method of one of the previous claims, wherein identifying the topology of the CPU network includes system memory training.

4. The method of one of the previous claims, wherein the TPL is performance data based on at least one of a number of CPU ports between the first processor and the second processor, a link speed of the number of CPU ports, and a link width of the number of CPU ports.

5. The method of one of the previous claims, wherein transmitting the TPL to the OS includes transmission via a Unified Extensible Firmware Interface (UEFI) runtime service solution, wherein the UEFI runtime service solution collects the TPL for the topology.

6. The method of claim 5, wherein the UEFI runtime service solution receives a request for TPL from the OS.

7. The method of one of the previous claims, wherein the topology is at least one of a heterogeneous multi-socket topology or a symmetrical multi-socket topology.

8. The method of one of the previous claims, wherein the connection status represents an error between the at least one of the first and the second CPU ports.

9. The method of claim 8, wherein the error represents a broken CPU link.

10. The method of claim 8 or 9, further including the error to change the topology from a symmetrical multi-socket topology to a heterogeneous multi-socket topology.

11. The method of claim 10, further including the error to maintain the symmetrical multi-socket topology.

12. At least one computer-readable medium comprising instructions that, when executed, cause at least one processor to perform the method of any one of claims 1 to 11.

13. The at least one computer readable medium as defined in claim 12, wherein at least one of the first or the second CPU port is an invalid port.

14. An apparatus comprising a processor to perform the method of any one of claims 1 to 11.

15. An apparatus comprising:
interface circuitry; and
processor circuitry including one or more of:
at least one of a central processing unit (CPU), a graphic processing unit or a digital signal processor, the at least one of the central processing unit, the graphic processing unit or the digital signal processor having control circuitry to control data movement within the processor circuitry, arithmetic and logic circuitry to perform one or more first operations corresponding to instructions, and one or more registers to store a result of the one or more first operations, the instructions in the apparatus;
a Field Programmable Gate Array (FPGA), the FPGA including logic gate circuitry, a plurality of configurable interconnections, and storage circuitry, the logic gate circuitry and interconnections to perform one or more second operations, the storage circuitry to store a result of the one or more second operations; or
Application Specific Integrate Circuitry (ASIC) including logic gate circuitry to perform one or more third operations;
the processor circuitry to perform at least one of the first operations, the second operations or the third operations to instantiate:
CPU detector circuitry to determine, in a central processing unit (CPU) network, a connection status between at least one of a first CPU port on a first processor and a second CPU port on a second processor,
encoder circuitry to generate a first CPU identifier for the first CPU port and a second CPU identifier for the second CPU port,
topology identifier circuitry to identify a topology of the CPU network based on the connection status and the CPU identifiers,
transaction performance level (TPL) calculator circuitry to calculate a TPL based on at least one of the connection status, the first CPU identifier, the second CPU identifier, and a topology identifier circuitry, and
TPL transmitter circuitry to transmit the TPL to an operating system (OS).
